# EUROPEAN PATENT APPLICATION

(11) **EP 2 017 050 A1**
(43) Date of publication of application: **21.01.2009**
(21) Application number: 06832919.2
(22) Date of filing: 13.11.2006
(51) Int. Cl.: B29B 9/10, B29B 9/06, B29B 17/00, C08J 11/12, C10B 53/07, C10B 57/04, C10L 5/48

(54) **METHOD OF MOLDING WASTE PLASTIC AND METHOD OF PYROLYZING WASTE PLASTIC**

(30) Priority: 27.04.2006 JP 2006122860
(71) Applicant: Nippon Steel Corporation, Tokyo 100-8071 (JP)
(72) Inventor: IBARAKI, Tetsuharu, Kimitsu-shi Chiba 299-1141 (JP); KOSEKI, Tsuneo, Kimitsu-shi Chiba 299-1141 (JP); TOODA, Yuuji, Kimitsu-shi Chiba 299-1141 (JP); HIROMATSU, Takashi, Kimitsu-shi Chiba 299-1141 (JP); MORI, Yasuhiko, Kitakyushu-shi Fukuoka 804-8505 (JP); SHIOZAWA, Syuuichi, Kimitsu-shi Chiba 299-1141 (JP); SAKATANI, Masatoshi, Kimitsu-shi Chiba 299-1141 (JP); SATO, Takashi, Kitakyushu-shi Fukuoka 804-8501 (JP)
(74) Representative: Vossius & Partner
(86) International application number: PCT/JP2006/323041
(87) International publication number: WO 2007/125626

(57) **Abstract**

The invention is directed to producing high-density pellets by molding waste plastic and to producing high-strength coke by mixing the pellets with coal and dry-distilling the mixture in a coke oven. As feedstock is used waste plastic that contains polyethylene, polypropylene and polystyrene, which are plastics that soften at a low temperature, at a total rate of 50% or greater. The waste plastic is molded using a molding method of extruding it from a nozzle of a screw-type stuffing machine. In the method of this invention, the waste plastic is heated to 180 - 260 °C in the molding machine and gas in the molding machine is sucked out. By this operation, the polyethylene, polypropylene and/or polystyrene are made molten and the amount of gas in the plastic is reduced. The plastic in this state is compression-molded by extrusion from a nozzle of 15 - 60 mm diameter. The plastic molding obtained is cut into chunks and cooled with a water cooler within 3 seconds after cutting.

## Description

### FIELD OF THE INVENTION

This invention relates to a method of processing waste plastic, including refuse plastics such as scrap plastic occurring in the processing of plastic and used container/packaging plastic, particularly to a method of processing waste plastic into high-density pellets. It further relates to a recycling method, namely a method for obtaining fuel gas, oily matter, and coke by thermal decomposition and vaporization of the pellets in a coke oven.

### DESCRIPTION OF THE RELATED ART

Conventionally, scrap plastic arising in the processing of plastic and used plastic (sometimes referred to herein collectively as "waste plastic") has been incinerated or used as landfill. Disposal by incineration damages the incinerator because of the high incineration temperature. Incineration also has a problem of generating dioxin through reaction between co-present chlorine and hydrocarbons produced during burning. 0ne problem with disposal of plastic as landfill is that the reclaimed land is low in utility value because the failure of the plastic to decompose prevents the ground from becoming firm.

Various forms of plastic recycling have been introduced to deal with the issue of plastic disposal. For example, conversion of plastic to oil or gas has been attempted but has not proved practical because of the high processing cost. In contrat, thermal decomposition and vaporization plastic in a coke oven is an economical method enabling high volume recycling. As thermal decomposition and vaporization in a coke oven yields fuel gas and oily products, as well as coke, it is an excellent method from the aspect of diverse applicability.

The thermal decomposition and vaporization method consists in mixing waste plastic with coal charging the mixture into a coke oven, and conducting thermal decomposition and vaporization at about 1,200 °C. The method is described, for example, in Japanese Patent Publication (A) No. S48-34901. Although the yields vary with the type of plastic used, about 15 ∼ 20% of the plastic is converted to coke, about 25 ∼ 40% to oily products, and about 40% to coke oven gas (gas composed chiefly of hydrogen and methane). The coke derived from the plastic is discharged from the coke oven as mixed with coke derived from the coal. The composite coke is used as a reducing agent or fuel in a blast furnace, ferroalloy production process or the like.

The method of thermal decomposition and vaporization waste plastic in a coke oven is an effective way of economically recycling of plastic. However, accurate information regarding the relationship between the method of using the plastic and the coke quality has not been available. The quality of the coke produced has therefore been a problem. For example, the technique used to recover considerable amounts of gas or tar using the teaching of Japanese Patent Publication (A) No. H8-157834 gives no consideration to the coke quality, so that when a large quantity of plastic is mixed in, the coke produced is low in strength. Coke is used in blast furnaces, cupolas and other large-scale equipment and must be able to withstand the load conditions in such furnaces. Poor coke strength is therefore a critical quality issue.

Used plastic from households etc. is utilized for recycling after separating out non-plastic trash. Actually, however, the amount of mixed-in extraneous matter is high, so that the ash content is sometimes as great as 10%. Since the moldability is therefore poor, the shape of the pellets is poor and the apparent specific gravity is low.

Japanese Patent Publication (A) No. 2000-372017 teaches that this problem is overcome by thermal decomposition and vaporizing a mixture of coal and waste plastic pellets of predetermined size and high density. The high-density plastic pellets used are said preferably to have an apparent density of 0.4 - 0.95 kg/L. So improvement by means of a method for increasing waste plastic pellets density has been carried out heretofore.

### SUMMARY OF THE INVENTION

Thus, in plastic recycling using a coke oven according to the prior art, the method has been adopted of mixing coal and high-density waste plastic pellets, such as those set out in Japanese Patent Publication (A) No. 2000-372017, and using the mixture in a coke oven. As this method conducts molding without melting, the periphery of the cut face is inevitably fuzzy. The fuzzy region lowers the bulk density (spatial volume occupied by the pellet aggregate divided by the total mass of the pellets) and degrades the flow of the pellet aggregate. The pellet bridging that occurs as a result may sometimes make it impossible to cut the pellet aggregate out of the storage tank and cause other problems. Another problem has been generation of much powder owing to detachment of the fuzzy regions from the main body.

The apparent density of pellets (individual pellet mass divided by pellet volume) produced by ordinary methods is usually 0.6 - 0.7 g/cm³ and at the most around 0.8 g/cm³. Even by employing a special method such as one using a nozzle of small diameter (3 - 5 mm), it has not been possible to achieve an apparent density of 0.95 g/cm³ or greater. The favorable effect on high-density coke production is therefore limited, and achievement of higher densities is desired.

Although the advantage of increasing the density of waste plastic pellets has been understood, good results have not always been realized. A need is therefore felt for a new technique for overcoming this problem. This invention provides a new technique that solves the foregoing problem by overcoming the drawbacks of the prior art method when producing dense plastic pellets from waste plastic and thermal decomposition and vaporizing them in a coke oven.

On the other hand, there is also known a conventional method of melting certain types of plastic and extruding the melt from a nozzle to produce a high-density plastic product. For instance, there is known the method of injecting plastic into molds set out in Japanese Patent Publication (A) No. H05-77301. Although this method enables production of a high-density plastic shaped article, production is slow and cost high because it is done by injecting molten plastic into molds. So it is not suitable as a means for producing waste plastic pellets. A need therefore exists for a method suitable for waste plastic processing that is high in productivity and also enables processing at low cost.

The present invention was made to overcome the foregoing issues. The essence of the invention is as set out in (1) to (9) below.
(1) As feedstock is used waste plastic that is a mixture of multiple types of plastic containing at least one thermoplastic resin selected from among polyethylene, polypropylene and polystyrene, which are plastics that soften at a low temperature, in a total amount accounting for 50% or greater of the mixture. The waste plastic is molded using a molding method of extruding it from a nozzle of a screw-type stuffing machine. In the method of this invention, the waste plastic is heated to 180 - 260 °C in a molding machine. Gas in the molding machine is sucked out in this condition. By this operation, the polyethylene, polypropylene and/or polystyrene are made molten and the amount of gas in the plastic is reduced. The plastic in this state is compression-molded by extrusion from a nozzle of 15 - 60 mm diameter. The plastic molding obtained by this method is cut into chunks and cooled with a water cooler within 3 seconds after cutting. The plastic pellets produced by this method have few internal voids and have a good internal void pattern free of large independent voids.
(2) When as feedstock there is used waste plastic that is a mixture of multiple types of plastic containing polyethylene, polypropylene and/or polystyrene in a total amount accounting for 50% or greater of the mixture and that further includes waste plastic containing chlorine-containing plastic (hereinafter sometimes called "chlorinated resin") in an amount of not greater than 4 mass% on a chlorine mass ratio basis, the method of (1) requires still higher state control accuracy. This is because of the need to appropriately control hydrogen chloride generated from the chlorinated resin and requires rigorous control of the depressurization condition. Specifically, under the temperature condition set out in (1), the suction pressure in the vessel holding the waste plastic is reduced to 0.1 - 0.35 atm (absolute pressure), and, starting from this condition, ejection from a 15 - 60 mm diameter nozzle is conducted to obtain a plastic molding by compression molding, thereby obtaining plastic pellets in a condition suitable for use in the coke oven. It is generally desirable to utilize this method when the chlorine-containing plastic content ratio is 0.5% or greater on a chlorine basis.
(3) In the method set out in (1) or (2), the produced pellets are cooled in the water cooler to a surface temperature of 80 °C or less within 2 seconds.
(4) Waste plastic is molded by the method of any of (1) to (3) using a molding machine having a single stuffing screw and equipped with 2 - 8 nozzles, wherein the sum of the nozzle diameters (nozzle diameter x number of nozzles) is 1/4 or less the circumferential length of the stuffing screw.
(5) Waste plastic is molded by the method of any of (1) to (3) using a molding machine having a pair of stuffing screws and equipped with 2 - 8 nozzles, wherein the sum of the nozzle diameters (nozzle diameter x number of nozzles) is 1/6 or less of the sum of the circumferential lengths of the stuffing screws.
(6) Plastic pellets are used that have no holes or cracks passing from the surface into the interior and have an apparent density of 0.85 - 1.1 g/ cm³. The volume of the pellets is preferably 6,000 ∼ 200,000 cubic mm. The pellets are mixed with coking coal of an average pellet size of 5 mm or less, and the mixture is supplied to a coke oven. After thermal decomposition and vaporization coking is conducted continues for 15 - 24 hours to thermally decompose the waste plastic and combustible gases, chiefly hydrogen and methane, as well as oily products constituted of hydrocarbon compound. It is a method in which the thermal decomposition and vaporization residue is recovered as coke.
(7) A method for thermal decomposition of waste plastic comprises mixing plastic pellets with coal and thermal decomposition and vaporizing the mixture in a coke oven, wherein the maximum length of each individual pore present in a plastic pellet is not greater than the cube root of the plastic pellet volume and individual pore volume is not greater than 10% of the plastic pellet volume.
(8) A method according to (6) or (7) is provided that comprises mixing with coal 6,000 - 200,000 cubic mm pellets produced by the method for molding waste plastic of any of (1) to (3) and thermal decomposition and vaporizing the mixture in a coke oven.
(9) A method according to any of (6) to (8), which is a method for thermal decomposition of waste plastic wherein the mixing ratio of plastic pellets to coal is 5 mass% or less.

### BRIEF DESCRIPTION OF THE DRAWINGS

FIG. 1 is an overall block diagram of equipment for processing waste plastic.
FIG. 2 shows an example of a waste plastic molding machine for implementing the present invention.
FIG. 3 shows a water cooler for cooling waste plastic pellets extruded from a molding machine for implementing the present invention and having fluidity.
FIG. 4 shows the internal structure of a pellet produced by the present invention.
FIG. 5 shows the structure and contents of a coke oven carbonization chamber.
FIG. 6 is a graph showing the results of an investigation into how coke strength varies as a function of pellet mixing ratio for cokes produced from mixtures obtained by mixing coal and pellets of various volumes.

### DETAILED DESCRIPTION OF THE INVENTION

The present invention is directed to processing waste plastic that is a mixture of multiple kinds of plastic pieces. The source materials are generally waste plastic in the form of containers/packaging and other articles of daily use discarded from households, and miscellaneous waste plastic discarded from factories and the like. Such waste plastic is a mixture of plastic pieces of various types and is formed into a feedstock containing thermoplastic resin, namely at least one of polyethylene, polypropylene and polystyrene, at the rate of 50 mass%. When total amount of the feedstock is melted, intense adhesion, persistence of large pores in the molding, and other problems arise during molding. The maximum melting rate is therefore preferably made 90 mass%. Moreover, molding is preferably conducted after crushing the waste plastic because molding is easier when the maximum length of the pieces is around 50 mm or less.

The waste plastic generally includes extraneous matter, so it is preferable to carry out an extraneous matter removal operation before or after crushing. The amount of inorganic matter entrained is preferably kept to 5 mass% or less in order to prevent deterioration of extrusion property during molding. In practice, however, reduction of the amount of entrained inorganic matter to 0.5 mass% or less difficult to achieve and the presence of a higher content does not adversely affect the extrusion property during molding, so the technical significance of lowering the inorganic matter entrainment rate to lower than this level is small. The particularly preferred inorganic matter content range in this invention is therefore in the range of 0.5 - 5 mass%.

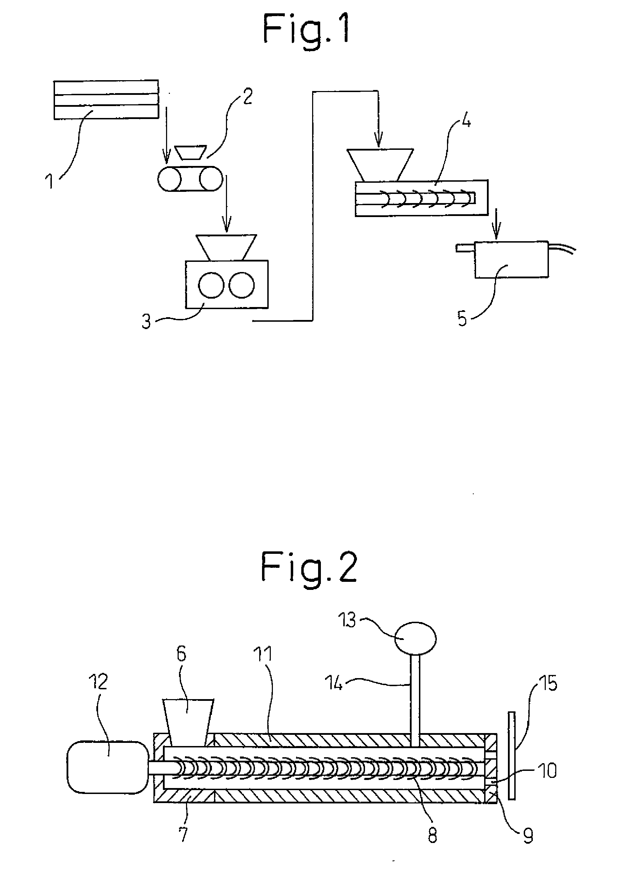

Waste plastic processing equipment suitable for carrying out these operations is shown in FIG. 1. After removal of inorganic matter by a vibrating sieve 1 and a magnetic separator 2, the waste plastic feedstock is crushed to a size of 10 - 50 mm or smaller by a crusher 3. The crushed plastic pieces are supplied to a molding machine 4 and molded. The molded product is cut into short lengths and cooled to room temperature in a cooler 5 to obtain pellets.

An example of a molding machine for implementing the present invention is shown in FIG. 2. The molding machine, designated by reference numeral 4, comprises a supply port 6, a casing 7, stuffing screw 8, end-plate 9, nozzle 10, electric heating element 11, motor 12, vacuum pump 13, exhaust pipe 14 and cutter 15. The stuffing screw 8 is driven by the rotational output of the motor 12 to rotate in the direction of extruding the plastic from the nozzle 10. The waste plastic pieces are fed into the casing 7 through the supply port 6. Inside the casing 7, the waste plastic pieces are progressively forced inward and compacted by the stuffing screw 8. The frictional heat generated at this time and heat from the electric heating element 11 are used to heat the waste plastic to 180 - 260 °C. Thermoplastic resins like polyethylene, polypropylene and polystyrene melt at this temperature. The content of polyethylene, polypropylene, polystyrene and the like should be 50 mass% or greater. When their content is lower than this, the portion thereof in a molten state decreases to degrade cohesion during molding. However, when the content of polyethylene, polypropylene, polystyrene and the like exceeds 90 mass%, the resistance at the molding machine nozzles diminishes to lower the force of plastic compaction. The content is therefore preferably not greater than 90 mass%.

The temperature of the waste plastic in the molding machine is regulated to within the range of 180 - 260 °C. The temperature of the waste plastic is decided within this range based on the content ratios of the plastic constituents. When the content of thermoplastic resins is high or when the content of polyethylene, a thermoplastic resin having a low melting point, is high, a low temperature in the approximate range of 180 ∼ 200 °C is used. When the content of thermoplastic resins is low or when the content of polypropylene and the like, i.e., of thermoplastic resins having a high melting point, is high, a high temperature in the approximate range of 200 ∼ 260 °C is used.

When the temperature is below the foregoing ranges, the viscosity of the plastic is high, making it hard to mold and also making it hard to remove the gas component entrained by the compacted plastic. As a result, the post-molding density does not increase. To be more specific, when the temperature is below 180 °C, the portion in a liquid state is small even when much low-melting-temperature polyethylene is present, so that high density cannot be achieved. On the other hand, when the temperature is above the foregoing ranges, i.e., when it exceeds 260 °C, gas generates, from some of the plastic, making the amount of gas in the fluid plastic excessive and again keeping the density from becoming high. A particular problem that arises when the temperature exceeds 260 °C is that chlorinated resins like polyvinyl chloride and polyvinylidene chloride actively generate hydrogen chloride gas. This generation of hydrogen chloride gas swells the product pellets, so that they do no achieve a high apparent density. And since hydrogen chloride gas is highly corrosive, processing at not higher than 260 °C so to suppress hydrogen chloride generation is also preferable from the viewpoint of equipment maintenance.

Under these conditions, the waste plastic assumes a state in which the liquid portion accounts for 50 ∼ 90% and the solid and low-fluidity portions account for 10 ∼ 90%, so that the plastic becomes fluid as a whole. In this condition, gas is incorporated into the waste plastic kneaded by the stuffing screw 8 owing to trapping of entrained gas, evaporation of water adhering to the waste plastic from before molding, and vaporization of some plastic constituents. If this situation is not dealt with, pores come to be present in the cut and cooled pellets. The apparent density of the cooled pellets decreases as a result. This is prevented by extracting gas from the fluid plastic through the exhaust pipe 14 connected to the vacuum pump 13. The suction pressure of the casing 7 is preferably reduced to below atmospheric pressure. In ordinary processing, the suction pressure at this time is made 0.1 0.5 atm. Particularly in processing plastic including vinyl chloride or the like, or when the molding machine is one having a high production capacity of 1 ton/hr or greater., the pressure needs to be maintained relatively low. Specifically, when chlorinated resin is mixed in at a ratio of 4 mass% based on chlorine, the pressure should be kept in the range of 0.1 - 0.35 atm. The viscosity of fluid plastic is high, so that even when the viscosity is lowered by high temperature, extraction of gas takes too much time unless the pressure is 0.5 atm or less, making it impossible to extract gas completely while the fluid plastic resides in the molding machine. However, when the suction pressure is too low, a problem may arise of inducing excessive gas generation with pressure reduction, so the suction pressure is best controlled to 0.1 atm or greater. Under condition of high production ' capacity, when the temperature is in the range of 180 ∼ 200 °C, i.e., under low-temperature condition, a suction pressure in the range of 0.1 - 02 atm is preferable because the plastic viscosity is high. At 200 - 260 °C, the viscosity of the plastic is relatively low and a suction pressure in the range of 0.12 - 0.35 atm is therefore especially preferable. In the case of conducting unified pressure control for producing high-density pellets having an apparent density of around 0.9 kg/L or greater even when temperature varies, suction pressure in the range of 0.1 - 0.2 atm is preferable. This is particularly effective when the chlorinated resin content is 0.5 mass% or greater on a chlorine basis.

The fluid plastic is extruded from the nozzle 10. A nozzle diameter of 15 - 60 mm is desirable. When the nozzle diameter is less than 15 mm, solids and low-fluidity portions in the fluid plastic tend to increase friction with the nozzle and nozzle clogging tends to occur as a result. When the nozzle diameter exceeds 60 mm, the velocity at which the fluid plastic passes through the nozzle becomes too fast, so that plastic density increase in the casing is inadequate. As a result, the apparent density fails to rise. Moreover, in the case of extruding from multiple nozzles, the large variance in the viscosity at different regions of the fluid plastic makes a special operation necessary for ensuring uniform extrusion of plastic from all nozzles. Most suitably, the cutter 15 is one of rotary type having a blade with a sharp edge angle (preferably 30 degrees or less). This is because a sharp blade is necessary for cutting fluid plastic.

The inventors conducted an experiment using nozzles of 15 - 60 mm diameter, from which they learned the following. In order to achieve suitable distribution of the fluid plastic, the nozzles must be spaced apart and the optimum spacing is related to the diameter of the stuffing screw 8. A quantitative analysis of the relationship revealed that suitable ranges exist for the diameter of the stuffing screw 8, the nozzle diameter and the number of nozzles, and that molding goes well when the ratio of the diameter of the stuffing screw 8 to the product of nozzle diameter times number of nozzles is equal to or less than a certain value. On the other hand, in order to achieve uniform distribution of the fluidized plastic in the present invention, the number of nozzles installed should be 8 or less. When multiple nozzles, i.e., 2 - 8 nozzles, are installed, a design that makes the sum of the nozzle diameters (nozzle diameter x number of nozzles) 1/4 or less the circumferential length is effective. In a configuration using a pair of stuffing screws 8 (dual screw configuration), the sum of the nozzle diameters should be 1/6 or less the sum of the screw circumferences.

The plastic extruded from the nozzles is cut by the cutter 15 to produce plastic chunks whose length is 1 - 3 times the diameter of the nozzle 10. The chunks are cooled immediately after cutting to produce roomtemperature plastic pellets. If the start of cooling is delayed or the cooling rate is slow, gas remaining in the chunks expands to swell the pellets. This makes it impossible to produce the high-density pellet that is the object of the present invention. The reason for this is that immediately after cutting, the plastic is still fluid and contains residual gas inside. The fluid plastic must therefore be rapidly cooled and solidified. The cooling is therefore commenced immediately after cutting. As the cooling method, there is adopted a water cooling method that can achieve a rapid cooling rate.

Upon examining the plastic chunks while still fluid after cutting, the inventors found that swelling by residual gas becomes barely observable from about 2 seconds after cutting and is pronounced after passage of 6 - 8 seconds after cutting. This is because the swelling by the internal gas is delayed owing to the high viscosity of the chunk. Under suitable conditions, thorough solidification of the plastic to a depth of 2 mm from the surface is possible within 2 seconds. It was found that swelling can be inhibited by quickly forming a solidified surface layer of 2 mm or greater thickness. After cutting, it is therefore desirable to start water cooling within 3 seconds so as to form a solidified layer to a depth of 2 mm from the surface within 6 seconds of cutting. This method enables production of high-density pellets with no swelling. On the other hand, the inventors conducted various experiments in which, for example, they poured water of a temperature of or below around 50 °C onto plastic chunks in the fluid condition. As a result they learned that the aforesaid condition can be achieved insofar as the surface temperature of the pellets can be decreased to 80 °C or lower within 3 seconds of cutting.

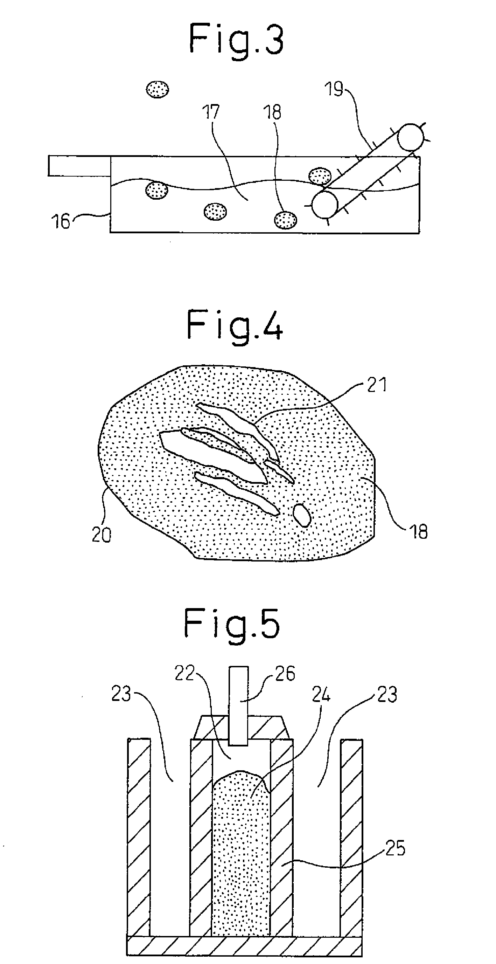

As the specific method of cooling, it is desirable to use the method of immersing the chunks in water, the method of pouring a large quantity of running water onto the chunks, or the method of spraying water onto the blocks. Moreover, for achieving the aforesaid condition, an adequate solidified surface layer can be formed within the time frame required by the present invention provided that, as strong water cooling, the cooling rate is 10 - 60 °C/min in terms of the temperature average for the whole cross-section. Suitable methods for this are to immerse the fluid plastic blocks in water of a temperature not higher than 50 °C, spray them with water of a temperature not higher than 50 °C, or immerse them in running water of a temperature not higher than 65 °C and a flow rate of not less than 1 m/sec. For instance, the method shown in FIG. 3 can be adopted. A water tank 16 is filled with water 17 and pellets (chunks) 18 are cast into the water. The temperature of the water 17 is controlled by the circulation cooling method, the cold water makeup method or other such method. The cooled pellets 18 are withdrawn with a conveyor 19 and dewatered to obtain the final product.

The internal structure of a pellet produced by the foregoing method is shown in FIG. 4. The surface 20 is smooth because the pellet was cooled from the molten state. Although layer-like pores 21 are present internally, the pores occupy only around 5 - 15% of the pellet volume. Moreover, where the pellet is one having a characteristic length (defined as cube root of volume) of 50 mm, the pore thickness is about 2 - 5 mm. Pellets meeting these conditions will not disintegrate or deform during transport. The apparent densities of pellets obtained in a production experiment conducted by the inventors were in the range of 0.85 - 1.1. The present invention enables routine production of pellets with apparent density on this order. The high densities obtained by the present invention are 1.2 - 1.5 fold those by conventional methods.

The pellets are mixed with coal. The mixing ratio is made 5 mass% or less based on the quantity of coal. This is because at a mixing ratio greater than 5 mass%, many cracks occur in the coke chunks formed by thermal decomposition and vaporization and the yield of high-value lump coke usable in a blast furnace or cupola furnace decreases. This phenomenon also occurs in low-density pellets and in such case occurs even when the mixing ratio is 5 mass% or less. Since the pellets produced by the method of this invention are highly densified, they offer the merit of making this phenomenon unlikely to arise.

As coal is used a mixture of caking coal and ordinary coal crushed to 5 mm or less. A predetermined quantity of pellets and coal are mixed by a method that makes the mixture as uniform as possible. The mixture is supplied to a coke oven as shown in FIG. 5. The mixture 24 supplied into the carbonization chamber 22 is gradually heated by heat from the heating chambers 23 on opposite sides. It is dry-distilled from the surrounding carbonization chamber wall 25. Thermal decomposition reaction starts from the time when the plastic pellets reach a temperature of about 250 °C or greater. The plastic is converted to hydrogen, carbon monoxide, methane, ethane, benzene and other volatile hydrocarbon components that rise to the top of the carbonization chamber. 22 to be recovered through a recovery pipe 26. The volatile components are then cooled and thereafter dechlorinated, desulfurized and gas-liquid separated into combustible gases and oily products. Carbon component remaining in the carbonization chamber 22 is heated to a maximum temperature of 1,100 - 1,200 °C to coalesce coke derived from coal. The optimum dry distillation period is 18 - 24 hours. As carbon derived from plastic lacks viscosity, the coke strength at the interface between the plastic pellets and the coal is weak. The mixing ratio and properties of the pellets therefore affects coke quality.

Experiments conducted by the inventors showed the pellets of the present invention to have the following three characteristics. First, owing to their high density, they are advantageous in that for any given mass the pellet-coal volume ratio within the coal is low. Second, they have no pores or cracks extending from the surface to the interior, so that water does not seep into their interiors during storage or at the time of mixture with coal. And third, they have the merit of experiencing minimal swelling with temperature rise when supplied into the coke oven. These physical characteristics help to improve the coking conditions.

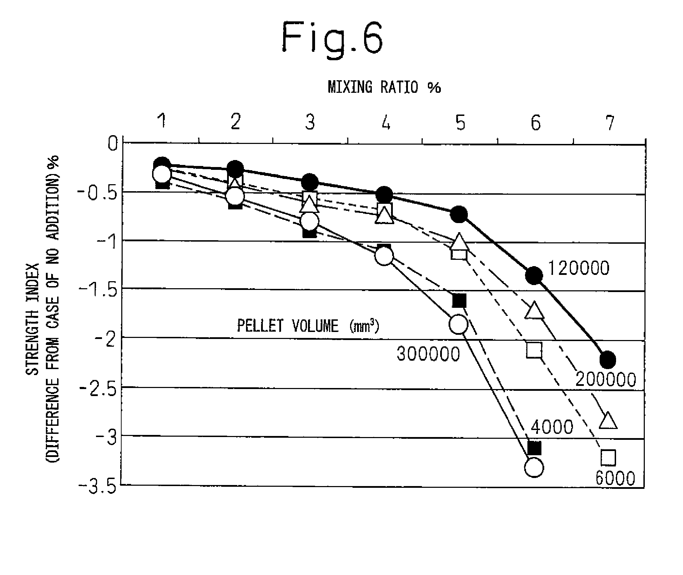

The fact that the pellets of this invention are high in density give them the advantage of small interface area even when the amount of waste plastic being mixed with the coal is the same as that when using low-density plastic pellets produced by a conventional method. Low strength portions of the produced coke can therefore be minimized. FIG. 6 shows the results of an investigation into how coke strength varies as a function of pellet mixing ratio for cokes produced from mixtures obtained by mixing coal and pellets of various volumes. The densities of the plastic pellets were in the range of 0.9 - 1.05 kg/L. When pellet volume was less than 6,000 cubic mm, the effect of this invention was small because the interface between waste plastic and coal was large despite the high density of the pellets. When pellet volume was greater than 200,000 cubic mm, waste plastic thermally decomposed to increase the size of internal voids after extraction of volatile components (combustible gas components and oily products). When the voids were large, the coke produced was, as expected, low in strength. The upper limit of pellet volume is therefore 200,000 cubic mm. It was thus found that little lowering of coke strength is experienced when the pellet volume is in the range of 6,000 ∼ 200,000 cubic mm (nozzle diameter is in the approximate range of 15 ∼ 60 mm). The strength index used in FIG. 6 implies that effects such as lowered iron productivity appear when the strength index of the coke used in the blast furnace is lower than that of coke produced in an ordinary operation by 1% or greater.

Another essential condition is for the surface and interior of the pellets not to be interconnected by spaces, i.e., for there to be no holes or cracks passing from the surface into the interior. When internal voids connected to the exterior are present, moisture contained in the coal invades to the interior of the pellets during pellet-coal mixing. Then when the pellets are supplied to a high-temperature region of the furnace, the internal moisture rapidly evaporates to disturb the charged state of the coal in the vicinity of the pellets. An important condition for producing high strength coke is therefore to avoid invasion of water into the pellet interior. Entry of water into the pellets occurs when the moisture content of the coal is 4 mass% or greater.

Under a temperature condition of 100 - 200 °C reached following supply of the pellets into the furnace, the plastic softens and air inside expands. The resulting increase in the volume of the pellets at this temperature lowers the effective density of the pellets. This is a problem because it diminishes the effect of the invention, which is directed to producing high-density pellets. From this it follows that constraining the size of the internal pores (closed pores) has a favorable effect on coke production results. Preferably, therefore, the maximum length of each individual pore present in a plastic pellet is not greater than the characteristic length (defined as the cube root of plastic pellet volume) and individual pore volume is not greater than 10% of the plastic pellet volume.

### EXAMPLES

### Example 1

Waste plastic pellets produced by the method of this invention using waste plastic (Feedstock 1) of the composition shown in Table 1 were thermally decomposed in a coke oven. Feedstock 1 consisted of waste plastic recovered from a production process at a plastic processing factory. It contained 56 mass% of polyethylene and 13 mass% of polypropylene, for a total combined content of polyethylene and polypropylene of 69 mass%. No vinyl chloride or other chlorinated resin was mixed into the waste plastic. In Table 1, the symbols PE, PP and PS stand for polyethylene, polypropylene and polystyrene, respectively.

| Table 1 | | | | (In mass%) | |
|---|---|---|---|---|---|
| | PE | PP | PS | Other | Cl |
| Feedstock 1 | 56 | 13 | 0 | 31 | 0 |
| Feedstock 2 | 31 | 18 | 4 | 47 | 2.2 |
| Feedstock 3 | 51 | 19 | 8 | 22 | 0 |

The mixed plastic was crushed into pieces of a maximum length of 25 mm and processed in a molding machine of the type shown in FIG. 2. The molding machine was equipped with a single stuffing screw and a single 25 mm diameter nozzle. It had a processing rate of 1.0 ton/hr and permitted processing temperature selection at 10 °C intervals in the range of 180 - 260 °C. At processing temperature of 180 °C, the suction pressure was set to 0.115 atm because the plastic fluidity was low. Further, the suction pressure was set to 0.14 atm when the processing temperature was 190 °C, to 0.155 atm when it was 200 °C, to 0.165 atm when it was 210 °C, and to 0.18 atm when it was 260 °C. The fluid plastic exiting the molding machine nozzle was cut and cast into 45 - 55 °C running water within 1.5 - 2.8 seconds after cutting. The running water channel had a width of 250 mm and depth of 150 mm. The water flow rate was 1.5 m/sec. The products (pellets) obtained by the processing had a volume of 16,000 - 25,000 cubic mm and an apparent density of 0.91 - 1.02 kg/L. Detailed data is shown in Table 2. Thus the pellets obtained by the operation method of the invention had high density.

Pellets obtained by the invention (Products 1 ∼ 5) were subjected to recycle processing in a coke oven. The pellets had smooth surfaces and no cracks or holes extending into the interior. The maximum length of the closed pores was 2 - 10 mm in all pellets and none exceeded 1/2 the characteristic length. The volume of independent voids was 3 - 7% of pellet volume. The pellets were combined with coal at a mixing ratio of 2.3 mass%, mixed until substantially uniform, and supplied to the carbonization chamber of the coke oven. The processing period was 20 hours and the processing temperature at was 1,160 °C at its peak time point. The amounts of combustible gas and oily products obtained per ton of plastic under these conditions were 440 kg and 350 kg, respectively. About 190 kg was converted to coke, which was mixed and integrated with the coke derived from coal. The strength index of the coke was: (No addition value) -0.52 - -0.78%. Thus, even at a relatively large mixing ratio of 2.3%, the decline in coke strength was small. The strength index indicates the rate of occurrence of 15 mm or finer particles after tumbling for 150 revolutions at 15 rpm in an abrasion tester. Comparison was made with the case of no addition of waste plastic pellets.

**Table 2**

| | Unit | Product 1 | Product 2 | Product 3 | Product 4 | Product 5 |
|---|---|---|---|---|---|---|
| Processing temperature | °C | 180 | 190 | 200 | 210 | 260 |
| Suction pressure | Atm | 0.115 | 0.14 | 0.155 | 0.165 | 0.18 |
| Time to water-cooling | Sec | 1.5 | 1.6 | 2.7 | 1.9 | 2.6 |
| Water temperature | °C | 45 | 45 | 51 | 50 | 55 |
| Pellet volume | mm³ | 25000 | 24000 | 16000 | 24000 | 21000 |
| Pellets apparent density | g/cm³ | 1.02 | 0.99 | 0.91 | 0.92 | 0.91 |
| Product coke strength index | Difference vs no addition % | -0.52 | -0.61 | -0.71 | -0.69 | -0.78 |

In contrast, the apparent density of pellets produced by a conventional method was 0.61 g/cm³. The volume was 30,000 cubic mm. These pellets were also mixed with coal at a mixing ratio of 2.3% and recycle-processed. The amounts of combustible gases and oily products with these pellets were the same as those in Example 1. The strength index of the obtained coke was: (No addition value) -1.25%. Thus, even at the same mixing ratio, the coke strength index was markedly lower for the conventional low-density pellets.

### Example 2

Waste plastic pellets produced by the method of this invention using waste plastic (Feedstock 2) of the composition shown in Table 1 were thermal decomposed in a coke oven. Feedstock 2 consisted of waste plastic in the form of containers/packaging and other articles of daily use recovered from households. It contained 31 mass% of polyethylene, 18 mass% of polypropylene and 4 mass% of polystyrene, for a total combined content of polyethylene, polypropylene and polystyrene of 53 mass%. The content of chlorine as a constituent of vinyl chloride and other chlorinated resins was 2.2 mass%.

The mixed plastic was crushed into pieces of a maximum length of 25 mm and processed in a molding machine of the type shown in FIG. 2. The molding machine was equipped with a single stuffing screw and two 40 mm diameter nozzles. The diameter of the stuffing screw 8 was 160 mm. The product of the number of nozzles times the nozzle diameter was 80 mm and thus smaller than 1/4 the circumference of the stuffing screw 8. The processing rate was 1.2 ton/hr and the processing temperature was 200 °C. The suction pressure was set to 0.21 atm. The fluid plastic exiting the molding machine nozzles was cut and cast into 40 °C still water 1 ∼ 1.2 seconds after cutting. The product (pellets) obtained by the processing had a volume of 140,000 cubic mm and an apparent density of 0.97 kg/L.

The 140,000 cubic mm pellets obtained by the invention were subjected to recycle processing in a coke oven. The processing conditions were the same as in Example 1. The pellets were combined with coal at a mixing ratio of 2.8 mass%, mixed until substantially uniform, and supplied to the carbonization chamber of the coke oven. The strength index of the so-processed coke was: (No addition value) -0.68%. Thus, the decline in coke strength was small.

### Example 3

Waste plastic pellets produced by the method of this invention using waste plastic (Feedstock 3) of the composition shown in Table 1 were thermal decomposed in a coke oven. Feedstock 3 consisted of waste plastic in the form of containers/packaging and other articles of daily use recovered from households. It contained 51 mass% of polyethylene, 19 mass% of polypropylene and 8 mass% of polystyrene, for a total combined content of polyethylene, polypropylene and polystyrene of 78 mass%.

The mixed plastic was crushed into pieces of a maximum length of 50 mm and processed in a molding machine of the type shown in FIG. 2. The molding machine was equipped with a pair of 196 mm diameter stuffing screws and four 38 mm diameter nozzles. The product of the number of nozzles times the nozzle diameter was 152 mm and thus smaller than 1/6 the circumference of the stuffing screw 8. The processing rate was 2.4 ton/hr and the processing temperature was 185 °C. The suction pressure was set to minus 0.11 atm. The fluid plastic exiting the molding machine nozzles was cut and cast into 40 °C still water 1 second after cutting. The product (pellets) obtained by the processing had a volume of 76,000 cubic mm and an apparent density of 0.99 kg/L.

The 76,000 cubic mm pellets obtained by the processing were subjected to recycle processing in a coke oven. The processing conditions were the same as in Example 1. The pellets were combined with coal at a mixing ratio of 2.8 mass%, mixed until substantially uniform, and supplied to the carbonization chamber of the coke oven. The strength index of the recycle-processed coke was: (No addition value) -0.38%. Thus, thanks in part to the large pellet size, the decline in coke strength was particularly small.

### INDUSTRIAL APPLICABILITY

The present invention enables economical production of plastic pellets of high density and low powdering property. Moreover, since the pellets produced by the method explained in the foregoing are about 1.2 - 1.5 times denser than those of pellets according to the prior art, they are highly useful for plastic recycling in a coke oven because, under any given recycle processing conditions, they can be charged into the coke furnace at 1.2 - 1.5 fold the rate of conventional pellets with no degradation of coke oven productivity.

## Claims

1. A method for molding waste plastic comprising:
heating waste plastic that is a mixture of multiple types of plastic containing at least one thermoplastic resin selected from among polyethylene, polypropylene and polystyrene in a total amount accounting for 50 mass% or greater of the mixture to a temperature of 180 - 260 °C in a molding machine for extruding the waste plastic from a nozzle;
applying suction for extracting gas from the interior of the molding machine;
compression-molding the waste plastic by extruding it from the nozzle in this condition;
cutting the extruded waste plastic; and
cooling the cut waste plastic in a water cooler.

2. A method for molding waste plastic comprising:
heating waste plastic that is a mixture of multiple types of plastic containing at least one thermoplastic resin selected from among polyethylene, polypropylene and polystyrene in a total amount accounting for 50 mass% or greater of the mixture to a temperature of 180 - 260 °C in a molding machine for extruding the waste plastic from a nozzle;
applying suction for extracting gas from the interior of the molding machine;
compression-molding the waste plastic by extruding it from a nozzle of 15 - 60 mm diameter in this condition;
cutting the extruded waste plastic; and
cooling the cut waste plastic in a water cooler within 3 seconds after cutting.

3. A method for molding waste plastic according to claim 1 or 2, wherein:
waste plastic that is a mixture of multiple types of plastic containing at least one thermoplastic resin selected from among polyethylene, polypropylene and polystyrene in a total amount accounting for 50 mass% or greater of the mixture and that further includes waste plastic containing chlorine-containing plastic at the rate of not greater than 5 mass% on a chlorine mass ratio basis is applied with suction for extracting gas by an exhauster generating reduced pressure of 0.1 - 0.35 atm;
the waste plastic is compression-molded by extruding it from the nozzle in this condition;
the extruded waste plastic is cut; and
the cut waste plastic is cooled in a water cooler.

4. A method for molding waste plastic according to any of claims 1 to 3, wherein:
waste plastic chunks obtained by cutting waste plastic extruded from the nozzle in a totally or partially molten state are water-cooled in a water cooler to reach a surface temperature of 80 °C or less within 2 seconds of the start of cooling.

5. A method for molding waste plastic comprising:
molding waste plastic by the method of any of claims 1 to 4 using a molding machine having a single stuffing screw and equipped with 2 - 8 nozzles, wherein the sum of the nozzle diameters (nozzle diameter x number of nozzles) is 1/4 or less the circumferential length of the stuffing screw.

6. A method for molding waste plastic comprising:
molding waste plastic by the method of any of claims 1 to 4 using a molding machine having a pair of stuffing screws and equipped with 2 - 8 nozzles, wherein the sum of the nozzle diameters (nozzle diameter x number of nozzles) is 1/6 or less of the sum of the circumferential lengths of the stuffing screws.

7. A method for thermal decomposition of waste plastic comprising:
mixing coal and plastic pellets having no holes or cracks passing from the surface into the interior, having an apparent density of 0.85 - 1.1 g/ cm³ and having a volume of 6,000 200,000 cubic mm, and
thermal decomposition and vaporizing the obtained mixture in a coke oven.

8. A method for thermal decomposition of waste plastic according to claim 7, wherein:
the plastic pellets mixed with coal are ones in which the maximum length of each individual pore present therein is not greater than the cube root of the plastic pellet volume and individual pore volume is not greater than 10% of the plastic pellet volume; and
the obtained mixture thermal decomposed and vaporized in a coke oven.

9. A method for thermal decomposition of waste plastic according to claim 7 or 8, wherein plastic pellets produced by the molding method of any of claims 1 to 4 are mixed with coal; and
the obtained mixture is thermal decomposed and vaporized in a coke oven.

10. A method for thermal decomposition of waste plastic according to any of claims 7 to 9, wherein the mixing ratio of plastic pellets to coal is 5 mass% or less.
